# EUROPÄISCHE PATENTSCHRIFT

(11) **EP 1 070 718 B1**
(45) Veröffentlichungstag und Bekanntmachung des Hinweises auf die Patenterteilung: **05.03.2003**
(21) Anmeldenummer: 00114075.5
(22) Anmeldetag: 07.07.2000
(51) Int. Cl.: C07F 3/02

(54) **Verfahren zur Herstellung von Grignard-Reagenzien und neue Grignard-Reagenzien**
Method for Preparing Grignard Reagents and new Grignard Reagents
Procede de production de composes de grignard et nouveaux composes de grignard

(30) Priorität: 20.07.1999 DE 19933833
(43) Veröffentlichungstag der Anmeldung: 24.01.2001
(73) Patentinhaber: Bayer Aktiengesellschaft, 51368 Leverkusen (DE)
(72) Erfinder: Giffels, Guido, Dr., 53177 Bonn (DE); Steffan, Guido, Dr., 51519 Odenthal (DE)

(56) Entgegenhaltungen:
- WO-A-98/02443
- Zusätzlich zur Akte EP97/03516 eingereichte Seiten B und C. XP002906261
- REAL, SHARON ET AL.: 'A novel and Highly Efficient Desymmetrization of a Meso-Anhydride by a Chiral Grignard Reagent"' TETRAHEDRON LETT. Bd. 34, Nr. 50, 1993, Seiten 8063 - 8066, XP000941010
- ORITA, A. ET AL.: 'Integrated Chemical Process' TETRAHEDRON Bd. 55, 08 M{rz 1999, Seiten 2889 - 2898, XP000919007

## Beschreibung

Die vorliegende Erfindung betrifft ein Verfahren zur Herstellung von Grignard-Reagenzien, die eine geschützte Aldehydfunktion enthalten und neue derartige Grignard-Reagenzien.

Grignard-Reagenzien sind wichtige Zwischenstufen in der organischen Synthese, mit deren Hilfe verschiedenartige funktionelle Gruppen in ein Molekül eingeführt werden können. So kann man zahlreiche Wirkstoffe herstellen.

Die Überführung einer Ausgangsverbindung in ein Grignard-Reagenz ist jedoch nicht in jedem Fall unmittelbar möglich. Es gibt funktionelle Gruppen, z.B. die Aldehyd-Funktion, die mit einer Grignardierung nicht kompatibel sind. Ist eine solche funktionelle Gruppe im Molekül vorhanden und soll sie über einen Grignard-Syntheseschritt erhalten bleiben, so muß diese Gruppe durch geeignete chemische Derivatisierung geschützt werden. Diese Derivatisierung muß dann nach dem Grignard-Syntheseschritt rückgängig gemacht und die ursprüngliche funktionelle Gruppe wiederhergestellt werden. Aldehydgruppen werden deshalb vor Grignard-Reaktionen üblicherweise durch Umsetzung mit Alkoholen oder Orthoestern in Acetale überführt, die später wieder durch saure Hydrolyse gespalten werden. So wird z.B. als Diethylacetal geschützter 4-Brom-benzaldehyd nach Überführung in das Grignard-Reagenz durch Reaktion mit Tributylborat zur 4-Formyl-benzolboronsäure umgesetzt (Chem. Ber. 123, 1841 - 1843 (1990)), die als Synthesebaustein zum Aufbau von Biarylgerüsten für Pharmawirkstoffe von wirtschaftlichem Interesse ist (EP-A 757 982).

Kürzlich ist ein Verfahren beschrieben worden, mit dem Chloraromaten in Grignard-Reagenzien überführt werden können (WO 98/02443). Chloraromaten sind aber weniger reaktiv als Bromaromaten, so daß die Überführung von Chloraromaten in Grignard-Reagenzien oft nicht ohne weiteres möglich ist. Im Verfahren der WO 98/02443 wird deshalb zusätzlich ein anorganisches Grignard-Reagenz eines Übergangsmetalls als Katalysator eingesetzt. Im allgemeinen wird dieses Verfahren auf von Aldehydgruppenfreie Chloraromaten angewendet.

Lediglich in der Akte der WO 98/02443 (dort Beispiel 16) ist eine Grignardierung von 2-(4-Chlor-phenyl)-1,3-imidazolidin beschrieben, welches aus p-Chlorbenzaldehyd und N,N'N,N'-Dibenzylethylendiamin hergestellt wurde. Die Grignardisierung sowie die daraus hergestellte Folgestufe wurden in guten Ausbeuten erhalten. Nachteil dieser Syntheseroute ist die Verwendung eines dialkylierten Ethylendiamins als Schutzgruppe. Derartige Diamine sind im Vergleich zu anderen Schutzgruppen sehr teuer und nicht ohne weiteres in technischen Mengen erhältlich. Die Schutzgruppe bleibt auch nach der Reaktion im Molekül erhalten und muß in einem weiteren, aufwendigen Reaktionsschritt entfernt werden.

Es wurde deshalb versucht, dieses Verfahren mit einer üblichen Schutzgruppe für die Aldehydfunktion durchzuführen, wobei zunächst p-Chlorbenzaldehyd mit Orthoameisensäuretriethylester zu p-Chlorbenzaldehyddiethylacetal umgesetzt und dieses grignardisiert wurde. Das p-Chlorbenzaldehyddiethylacetal wurde jedoch nur zu ca. 34% in das Grignard-Reagenz überführt (siehe Vergleichsbeispiel 1). Die Umsetzung von p-Chlorbenzaldehyd mit 1,3-Propandiol zu 2-(4-Chlor-phenyl)-1,3-dioxolan ergab auch keinen brauchbaren Weg zu Grignard-Reagenzien des p-Chlor-benzaldehyds, da das Dioxolan sich als nicht als grignardisierbar erwies (siehe Vergleichsbeispiel 2). Daraus ist zu schließen, daß Acetalschutzgruppen für die Überführung von Chloraromaten in Grignard-Reagenzien nach dem Verfahren der WO 98/02443 nicht geeignet sind.

Es besteht deshalb noch immer ein Bedürfnis, nach einem Verfahren zur Herstellung von Grignard-Reagenzien, die eine geschützte Aldehyd-Funktion enthalten, bei dem nicht nur von Brom-, sondern vor allem auch von chlorhaltigen Aldehyden ausgegangen werden kann und bei dem Schutzgruppen verwendet werden können, die preiswert sind, in technischen Mengen zur Verfügung stehen und auf einfache Weise wieder abgespalten werden können.

Es wurde nun ein Verfahren zur Herstellung von Grignard-Reagenzien gefunden, die eine geschützte Aldehydfunktion enthalten, das dadurch gekennzeichnet ist, daß man zunächst aus einem halogenierten Aldehyd durch Umsetzung mit einem sekundären Monoamin ein offenkettiges Aminal herstellt, und dieses mit metallischem Magnesium in ein Grignard-Reagenz überführt.

Für das erfindungsgemäße Verfahren kommen als sekundäre Monoamine z.B. solche der Formel (I) in Frage 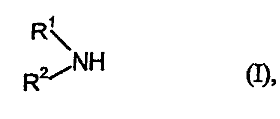 in der
- R¹ und R²: gleich oder verschieden sind und jeweils für geradkettiges oder verzweigtes C₁-C₁₀-Alkyl für gegebenenfalls mit bis zu 3 C₁-C₄-Alkylresten substituiertes C₆-C₁₀-Aryl stehen
sowie cyclische Amine der Formel 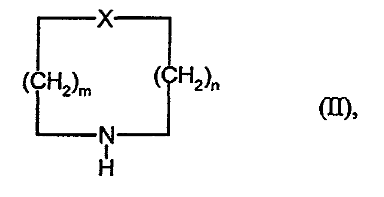 in der
- m und n: unabhängig voneinander Null, 1 oder 2 bedeuten und die Summe von m + n mindestens 1 beträgt und
- X: für Sauerstoff oder eine CH₂-Gruppe steht.

Bevorzugt sind Amine der Formel (I), bei denen R¹ und R² identisch sind und für geradkettiges C₁-C₄-Alkyl oder Phenyl stehen sowie cyclische Amine der Formel (II), bei denen m und n jeweils für 2 stehen.

Besonders bevorzugte Amine sind Dimethylamin und Morpholin.

Das sekundäre Monoamin, insbesondere sekundäre Alkylamine, kann man gegebenenfalls als wäßrige Lösung einsetzen, vorzugsweise in konzentrierter wäßriger Lösung.

Für das erfindungsgemäße Verfahren kommen als halogenierte Aldehyde z.B. 1 bis 3 Halogenatome enthaltende, geradkettige oder verzweigte C₂-C₂₅-Alkylaldehyde und 1 bis 3 Halogenatome enthaltende C₆-C₁₀-Arylaldehyde in Frage. Bei den Halogenatomen kann es sich z.B. um Chlor, Brom und/oder Iod handeln, bevorzugt sind Chlor und/oder Brom, besonders bevorzugt ist Chlor. Vorzugsweise ist in den halogenierten Aldehyden nur ein Halogenatom enthalten. Als halogenierte Aldehyde sind Benzaldehyde bevorzugt, insbesondere Chlorbenzaldehyde und ganz besonders p-Chlorbenzaldehyd.

Die Herstellung des offenkettigen Aminals aus dem halogenierten Aldehyd und dem sekundären Monoamin kann auf an sich bekannte Weise erfolgen (siehe z.B. J. Am. Chem. Soc. 77, 1114-1116 (1955) und 71, 2271-2272 (1949) und Synthesis 1993, 705-713) oder analog dazu. Man kann dabei z.B. so vorgehen, daß man pro Mol halogierten Aldehyd mindestens 2 Mol, vorzugsweise 2,1 bis 5 Mol sekundäres Monoamin einsetzt und das gebildete Reaktionswasser entweder mit einem geeigneten Lösungsmittel azeotrop abdestilliert oder mit einem Wasser entziehenden Mittel (etwa Kaliumcarbonat oder Borsäureanhydrid) entfernt.

Geeignete Reaktionstemperaturen sind z.B. solche im Bereich -30 bis +150°C. Das hergestellte offenkettige Aminal kann man auf verschiedene Weise isolieren, z.B. durch Extraktion, Destillation oder Kristallisation.

Zur Klarstellung wird darauf hingewiesen, daß unter dem Begriff "offenkettige Aminale" Aminale verstanden werden, bei denen die beiden Stickstoffatome nicht miteinander verbrückt sind. Beispielsweise stellt die Formel (III) ein offenkettiges Aminal dar, die Formel (IV) jedoch ein verbrücktes Aminal.

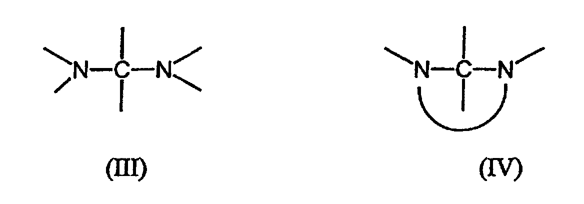

Die Überführung in das Grignard-Reagenz erfolgt, indem das offenkettige Aminal mit metallischem Magnesium zur Reaktion gebracht wird. Bei den reaktiveren offenkettigen Aminalen, bei denen die Grignardierung an einem Brom- oder Iod-Atom erfolgt, kann nach an sich bekannten Methoden zur Herstellung von Grignard-Reagenzien vorgegangen werden (siehe z.B. Organikum, 16. Auflage, VEB Deutscher Verlag der Wissenschaften, Berlin 1986, S. 495 ff). Dabei kann z.B. das offenkettige Animal bei einer Temperatur von -20°C bis zum Siedepunkt des Lösungsmittels oder Lösungsmittelgemisches, bevorzugt zwischen 0 und 100°C, mit Magnesium-Spänen oder Magnesium-Pulver in einem Ether als Lösungsmittel oder in einem Gemisch aus einem Ether und einem Kohlenwasserstoff als Lösungsmittel zur Reaktion gebracht werden. Geeignete Ether sind z.B. Tetrahydrofuran, 2-Methyltetrahydrofuran, Diethylether, tert.-Butylmethylether und Dimethoxyethan, geeignete Kohlenwasserstoffe sind z.B. Toluol, Cyclohexan, Hexan und Heptan. Bevorzugt werden Tetrahydrofuran oder Tetrahydrofuran/Toluol-Gemische eingesetzt. Im Falle von offenkettigen Aminalen, bei denen die Grignardierung an einem Chloratom erfolgt, kann es notwendig werden, das Magnesium katalytisch zu aktivieren, z.B. in der in WO 98/02443 beschriebenen Weise.

Das Magnesium kann z.B. in Form der für Grignardreaktionen handelsüblichen Späne oder als Pulver eingesetzt werden und z.B. in einem Überschuß von 1,05 bis 2 Mol-Äquivalenten, bezogen auf die Halogenverbindung. Als Aktivatoren zum Starten der Reaktion kommen beispielsweise elementares Iod oder niedere Bromalkane, bevorzugt Bromethan oder 1,2-Dibromethan infrage. Die Herstellung des Grignardreagenzes erfolgt in der Regel dosiertkontrolliert über die Zugabe der Halogenverbindung bei Temperaturen zwischen 0°C und der Siedetemperatur des Lösungsmittels und gegebenenfalls einer Nachreaktion. Die erhaltene Lösung oder Suspension des Grignardreagenzes kann - gegebenenfalls nach Abtrennung überschussigen Magnesiums ohne weitere Aufarbeitung in die nächste Stufe eingesetzt werden.

Der Herstellung des Grignard-Reagenzes folgt in der Regel als nächster Reaktionsschritt seine Umsetzung mit einem elektrophilen Reagenz. Als mögliche Elektrophile kommen beispielsweise Epoxide, Säurechloride, Ester, Borsäureester, Amide, Anhydride und Trialkylchlorsilane sowie Moleküle mit C = X-Mehrfachbindungen wie Aldehyde, Ketone oder Nitrile in Frage (siehe z.B. Handbook of Grignard Reagents, Marcel Dekker Verlag, New York, 1996, Part VI).

Ebenso einfach wie die Synthese ist die Spaltung der offenkettigen Aminale nach der erfolgten Umsetzung des Grignard-Reagenzes unter Rückbildung der Aldehydfunktion. Wird bei der hydrolytischen Aufabeitung nach der Umsetzung des Grignard-Reagenzes mit einem elektrophilen Reagenz in der Wasserphase ein schwach sauerer pH-Wert von z.B. 5 bis 1 eingestellt, so werden die Aminale unmittelbar und vollständig gespalten. Sehr vorteilhaft ist in diesem Zusammenhang nicht nur, daß die Aufarbeitung des Reaktionsgemisches und die Abspaltung der Schutzgruppe in einem einzigen Schritt erfolgen, sondern auch der Umstand, daß sich die abgespaltenen Amine in der schwach sauren Wasserphase anreichern, wohingegen das gewünschte Reaktionsprodukt normalerweise in der organischen Phase vorliegt. Auf diese Weise kann gleichzeitig die Abtrennung des Produktes aus dem Reaktionsgemisch und die Abtrennung der Schutzgruppe vom Produkt durchgeführt werden.

Demnach erfüllen die offenkettigen Aminale in nahezu idealer Weise die Anforderungen, die an eine Schutzgruppe gestellt werden: Sie sind billig, einfach anzubringen und einfach zu entfernen, und die gewünschte Synthese ist mit der geschützten Verbindung in guter Ausbeute durchführbar. Es gelingt mit einer solchen Schutzgruppe sogar, den geschützten p-Chlorbenzaldehyd ohne eine spezielle Aktivierung wie sie in der WO 98/02443 beschrieben ist, quantitativ in das entsprechende Grignardreagenz zu überführen.

Es ist außerdordentlich überraschend, daß diese Vorteile mit dem erfindungsgemäßen Verfahren erzielbar sind, denn die offenkettigen Aminale sind auch unter den zum Teil recht drastischen Bedingungen der Grignardisierung ausreichend stabil. Diese Stabilität war nicht zu erwarten, denn bei den offenkettigen Aminalen fehlt die stabilisiernde Wirkung des heterocyclischen Ringes, der bei den bekannten verbrückten Aminalen vorhanden ist.

Beim erfindungsgemäßen Verfahren ist eine Rückgewinnung der für die Bildung der offenkettigen Aminale eingesetzten sekundären Monoamine überflüssig, da es sich um kostengünstig zur Verfügung stehende Chemikalien handelt. Bei den bekannten Verfahren unter Einsatz von symmetrischen Ethylendiaminen und der Bildung von überbrückten Aminalen als Schutzgruppe ist dies nicht möglich, da dort aus Kostengründen die symmetrischen Ethylendiamine zurückgewonnen werden müssen.

Mit dem erfindungsgemäßen Verfahren gelingt es in besonders guter Weise 4-Chlorbenzaldehyd in das entsprechende offenkettige Aminal überzuführen und dieses praktisch quantitativ in ein entsprechendes Grignard-Reagenz umzusetzen. Auch bei den Umsetzungen dieses Grigard-Reagenzes in verschiedenartigen Folgestufen wurden gute Ausbeuten realisiert.

Eine Reihe der nach dem erfindungsgemäßen Verfahren herstellbaren Grigard-Reagenzien sind neu. Die vorliegende Erfindung betrifft deshalb auch Grignard-Reagenzien der Formeln (V) und (VI) 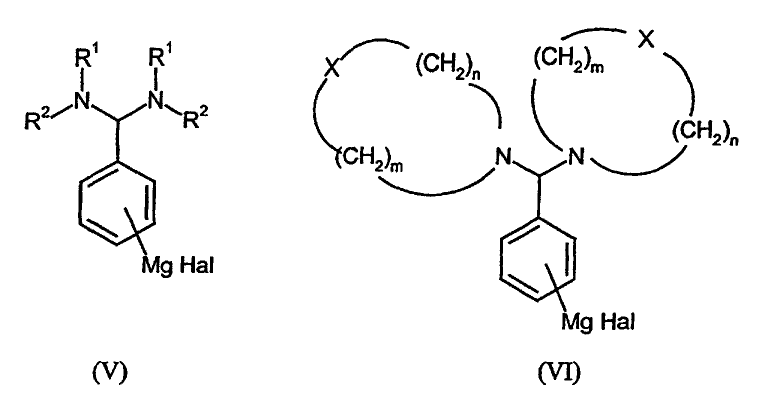 in denen
- R¹ und R²: die gleiche Bedeutung haben wie bei Formel (I) und m, n und X die gleiche Bedeutung wie in Formel (II) und
- Hal: für Chlor oder Brom steht.

Bevorzugte Verbindungen der Formeln (V) und (VI) sind solche, bei denen die verwendeten Symbole die bei Formel (I) bzw. bei Formel (II) als bevorzugt angegebene Bedeutung haben.

Besonders bevorzugte erfindungsgemäße Grignard-Reagenzien sind 4-(Di-(dimethylamino)-methyl)-phenylmagnesiumchlorid und 4-(Dimorpholinomethyl)phenylmagnesiumchlorid.

Verfahren zur Herstellung der erfindungsgemäßen Grignard-Reagenzien und ihre Anwendung sind weiter oben und in den Beispielen beschrieben, ebenso die mit ihnen erzielbaren technischen Fortschritte.

Gewünschtenfalls können die Verbindungen der Formeln (V) und (VI) isoliert werden, z.B. durch Filtration des kristallinen Niederschlags, der beim Abkühlen des Reaktionsgemisches zu ihrer Herstellung anfällt. Im allgemeinen werden diese Verbindungen in Form des bei ihrer Herstellung anfallenden Reaktionsgemisches, gegebenenfalls nach Abtrennung überschüssigen Magnesiums und gegebenenfalls nach Verdünnung mit einem geeigneten Lösungsmittel weiterverwendet.

### Beispiele

Alle Reaktionen zur Herstellung und Umsetzung von Grignard-Reagenzien wurden mit trockenem Tetrahydrofuran (Wassergehalt unter 0,02 Gew.-%) und unter Argon als Schutzgas durchgeführt.

### Beispiel 1

### 1-Chlor-4-(dimorpholinomethyl)-benzol

70 g p-Chlorbenzaldehyd und 105 g Morpholin wurden in 260 g Methylcyclohexan am Wasserabscheider zum Sieden erhitzt. Innerhalb von 45 Minuten wurden 8,4 ml Wasser ausgekreist. Man ließ unter langsamen Rühren abkühlen. Bei 58°C wurde die Lösung angeimpft, woraufhin langsam sehr feine Kristalle ausfielen. Der Ansatz wurde im Eisbad auf +5°C abgekühlt. Nach 1 Stunde Nachrührzeit wurde der ausgefallene Feststoff abgesaugt Das weiße Produkt wurde 2 mal mit je 50 ml Methylcyclohexan gewaschen und über Nacht im Trockenschrank bei 20°C und 100 mbar getrocknet. Es wurden 129,2 g Produkt in Form weißer Kristalle erhalten (87 % der Theorie)

Auf analoge Weise wurde aus 4-Brombenzaldehyd und Morpholin mit Cyclohexan als Lösungsmittel 1-Brom-4-(dimorpholino)-benzol in 94 %iger Ausbeute erhalten.

### Beispiel 2

### 1-Chlor-4-(di-(dimethylamino)-methyl)-benzol

373 g einer 60 gew.-%igen wäßrigen Dimethylamin-Lösung wurden zu 291 g 4-Chlorbenzaldehyd gegeben. Die Mischung wurde auf 50°C erwärmt, wobei aller Feststoff in Lösung ging, und über 3 Stunden bei 50 - 55°C gerührt. Dann wurde die Temperatur für 15 Minuten auf 100°C (Badtemperatur) erhöht. Man ließ über 2,5 Stunden unter Rühren langsam auf Raumtemperatur abkühlen. Das dann vorliegenden Reaktionsgemisch wurde mit 150 g Kaliumcarbonat versetzt, die obere organische Phase nach Zugabe von 450 ml Petrolether abgetrennt und die wäßrige Phase mit 100 ml Toluol extrahiert. Die vereingten organischen Phasen wurden über Kaliumcarbonat getrocknet, die Lösungsmittel abdestilliert und der Rückstand im Vakuum fraktioniert destilliert. Das Produkte destillierte bei 80°C und 0,8 mbar über. Es wurden 345,4 g Produkt in Form eines gelblichen Öls erhalten ( = 78 % der Theorie).

### Beispiel 3

### 4-(Di-(dimethylamino)-methyl)-phenylmagnesiumchlorid

4 g Magnesiumpulver (⌀ unter 0,1 mm) in 20 ml Tetrahydrofuran wurden bei 60°C mit 0,25 ml Bromethan aktiviert. Dann wurden 26,59 g 1-Chlor-4-(di-(dimethylamino)-methyl)-benzol (erhalten nach Beispiel 2) in 80 ml Tetrahydrofuran in einer Stunde zugetropft und noch 4 Stunden bei 60°C nachgerührt. Beim Abkühlen fiel ein Teil des Grignard-Reagenzes aus.

Von der so erhaltenen Suspensionen des Grignard-Reagenzes wurde zur Kontrolle der Metallierung eine Probe gezogen, mit wäßriger 1 M-Salzsäure hydrolysiert, die wäßrige Phase abgetrennt und mit tert.-Butylmethylether extrahiert, die vereinigten organischen Phasen mit Na₂SO₄ getrocknet und mittels GC untersucht. Das Grignard-Reagenz wird auf diese Weise in Benzaldehyd überführt, während nicht abreagiertes Aminal zum Chlorbenzaldehyd zurückgespalten wird. In der GC-Analyse wurde nur Benzaldehyd gefunden, was eine vollständige Metallierung anzeigt.

### Beispiel 4

### 4-(Di-(dimethylamino)-methyl)-phenylmagnesiumbromid

4 g Magnesiumspäne wurden mit 20 ml Tetrahydrofuran überschichtet und mit einem Iodkristall versetzt. Bei 23°C wurde dann begonnen, eine Lösung von 42,66 g 1-Brom-4-(di-(dimethylamino)-methyl)-benzol in 80 ml Tetrahydrofuran zuzutropfen. Nachdem 20 ml der Lösung zugegeben waren, wurde der Ansatz auf 60°C erwärmt und mit wenigen Tropfen Bromethan versetzt, woraufhin die Reaktion startete. Die restliche Lösung wurde unter gelegentlichem Kühlen so zugetropft, daß die Temperatur bei ca. 40°C blieb. Nach dem Ende der Dosierung wurde das Kühlbad entfernt, woraufhin die Temperatur erneut bis auf 58°C anstieg, und noch 1 h nachgerührt, wobei das Grignardreagenz zum Teil allmählich als feiner oranger Niederschlag ausfiel. Zur Vervollständigung der Metallierung wurde noch eine weitere Stunde bei 50°C nachgerührt. In der GC-Analyse einer hydrolysierten Probe wurde nur Benzaldehyd gefunden, was, wie in Beispiel 3 erläutert, eine vollständige Metallierung bedeutet.

Durch die Überführung in das Grignardreagenz verschiebt sich das ¹H-NMR-Signal der aromatischen Protonen des Aminals bei 7,45 ppm (Dublett, ³J_{HH} = 8 Hz, gemessen in ¹H-THF gegen D₂O-Standard in Extrakapillare) nach 7,0 ppm. Das ¹H-NMR-Signal bei 7,8 ppm (Dublett, ³J_{HH} ca. 6,5 Hz) bleibt praktisch unverändert. Gemessen wurde aus überstehener Grignard-lösung in ¹H-THF.

### Beispiel 5

### 4-(Dimorpholinomethyl-phenylmagnesiumchlorid

Analog Beispiel 3 wurden 3,35 g Magnesiumpulver in 20 ml Tetrahydrofuran mit 0,25 ml Bromethan aktiviert und dann bei 40°C unter intensivem Rühren 375 mg wasserfreies Eisen(II)chlorid zugesetzt. Nach 40 Minuten wurde auf 60°C erwärmt und dann 37,1 g 1-Chlor-4-(dimorpholinomethyl)-benzol (erhalten nach Beispiel 1) in 85 ml Tetrahydrofuran im Verlauf von 80 Minuten zugetropft. Dann wurde noch 3,5 Stunden nachgerührt. Die GC-Analyse einer hydrolysierten Probe ergab 91,1 Flächen-% Benzaldehyd und 3,1 Flächen-% 4-Chlorbenzaldehyd. Die Metallierung war also nahezu vollständig erfolgt.

### Beispiel 6

### 4-Trimethylsilylbenzaldehyd

Zu der nach Beispiel 5 erhaltenen Grignard-Reagenz-Suspension wurde unter Eiskühlung bei 20 bis 28°C eine Lösung von 19,5 ml Trimethylchlorsilan in 50 ml Tetrahydrofuran in 35 Minuten getropft. Man ließ auf Raumtemperatur aufwärmen und rührte 16 Stunden nach. Die erhaltene schwarze Lösung wurde langsam mit 50 ml Eiswasser hydrolysiert und dann mit 60 g wäßriger 2 M-Schwefelsäure auf einen pH-Wert von 4,5 eingestellt. Die sich bildenen Phasen wurden getrennt und die wäßrige Phase 3 mal mit je 50 ml tert.-Butylmethylether extrahiert. Die vereinigten organischen Phasen wurden mit 100 ml gesättigter wäßriger Kochsalz-Lösung gewaschen und die Lösungsmittel abdestilliert. Es wurden 22,1 g eines rotbräunlichen Öls erhalten, das laut GC-MS einen Gehalt von 96 % 4-Trimethylsilylbenzaldehyd aufwies, entsprechend einer Ausbeute von 95 % der Theorie.

### Beispiel 7

### 4-Formylbenzolboronsäure

Das nach Beispiel 3 erhaltene Grignard-Reagenz wurde mit 85 ml Dimethoxyethan vollständig in Lösung gebracht, vom überschüssigen Magnesium abdekantiert und in einem Tropftrichter vorgelegt. Die Lösung wurde innerhalb von 40 Minuten, gleichzeitig mit einer Lösung von 14 ml Trimethylborat in 5 ml Tetrahydrofuran, in einen auf -60°C temperierten Kolben, in dem 14 ml Tetrahydrofuran vorgelegt worden waren, getropft. Dann wurde das Kühlbad entfernt und noch 1 Stunde nachgerührt. Die erhaltene Paste wurde mit 121 g 2-molarer wäßriger Schwefelsäure hydrolysiert. Nachdem das Reaktionsgemisch keine festen Bestandteile mehr enthielt, wurde die organische Phase abgetrennt, durch Abdestillieren des Lösungsmittels auf 1/3 eingeengt und das Produkt daraus unter Rühren durch Zusatz von 280 g 1-molarer Salzsäure ausgefällt. Abfiltrieren ergab 13,6 g Produkt in form eines hellgelben Pulvers, das laut HPLC einen Gehalt von 96 Gew.-% aufwies, entsprechend einer Ausbeute von 70 % der Theorie.

### Beispiel 8

### 1-(4-Formylphenyl)butan-1-ol

Zu einer nach Beispiel 5 erhaltenen Grignard-Reagenz-Suspension wurde bei 15°C eine Lösung von 9 g Butyraldehyd in 50 ml Tetrahydrofuran über 40 Minuten zugetropft. Dann ließ man auf Raumtemperatur aufwärmen und rührte 16 Stunden nach. Das Reaktionsgemisch wurde dann unter Eiskühlung zuerst mit 50 ml Wasser hydrolysiert und dann mit 122 g wäßriger 2 M-Schwefelsäure auf einen pH-Wert von 3 eingestellt. Die organische Phase wurde von der wäßrigen Phase getrennt, die wäßrige Phase 2 mal mit je 50 ml tert.-Butylmethylether extrahiert, die organischen Phasen vereinigt, mit 100 ml gesättigter wäßriger Kochsalzlösung gewaschen und mit Natriumsulfat getrocknet. Nach dem Abdestillieren der Lösungsmittel wurde das Produkt in Form von 21,56 g eines rötlichen Öls erhalten. Es wies laut GC einen Gehalt von 62 Flächen-% auf, was einer Ausbeute von 60 % der Theorie entspricht.

### Vergleichsbeispiel 1

### Grignardierung von p-Chlorbenzaldehyd-diethylacetal

6,5 g Magnesiumpulver in 20 ml Tetrahydrofuran wurden mit 0,5 ml Bromethan aktiviert und bei 50°C unter intensivem Rühren mit 750 mg Fe(II)-Cl₂ (wasserfrei) versetzt. Nach 1,5 Stunden wurden 56,67 g 4-Chlorbenzaldehyddiethylacetal in 150 ml Tetrahydrofuran innerhalb von 2,5 Stunden zugetropft und noch 3 weitere Stunden bei 50°C nachgerührt. Die GC-Analyse einer hydrolysierten Probe ergab einen Gehalt von 34 % Benzaldehyd und 58 % 4-Chlorbenzaldehyd. Das bedeutet: Nur 34 % des Einsatzmaterials waren grignardisiert worden.

### Vergleichsbeispiel 2

### Grignardierung von 2-(4-Chlorphenyl)-1,3-dioxolan

Bei dem Versuch 2-(4-Chlorphenyl)-1,3-dioxolan auf vergleichbare Weise wie in Vergleichsbeispiel 1 zu metallieren, konnte die Grignardverbindung nicht erhalten werden. Die GC-Analyse einer hydrolysierten Probe ergab nur 0,1 % Benzaldehyd.

## Patentansprüche

1. Verfahren zur Herstellung von Grignard-Reagenzien, die eine geschützte Aldehydfunktion enthalten, **dadurch gekennzeichnet, daß** man zunächst aus einem halogenierten Aldehyd durch Umsetzung mit einem sekundären Monoamin ein offenkettiges Aminal herstellt und dieses mit metallischem Magnesium in ein Grignard-Reagenz überführt.

2. Verfahren nach Anspruch 1, **dadurch gekennzeichnet, daß** man als sekundäre Monoamine eine solche der Formel (I) 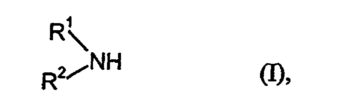 in der
R¹ und R² gleich oder verschieden sind und jeweils für geradkettiges oder verzweigtes C₁-C₁₀-Alkyl oder für gegebenenfalls mit bis zu 3 C₁-C₄-Alkylresten substituiertes C₆-C₁₀-Aryl stehen
oder solche der Formel (II) 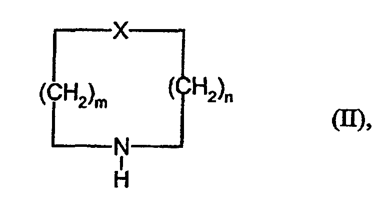 in der
m und n unabhängig voneinander Null, 1 oder 2 bedeuten und die Summe von m + n mindestens 1 beträgt und
X für Sauerstoff oder eine CH₂-Gruppe steht,
einsetzt.

3. Verfahren nach Ansprüchen 1 und 2, **dadurch gekennzeichnet, daß** man als halogenierte Aldehyde 1 bis 3 Halogenatome enthaltende, geradkettige oder verzweigte C₂-C₂₅-Alkylaldehyde oder 1 bis 3 Halogenatome enthaltende C₆-C₁₀-Arylaldehyde einsetzt.

4. Verfahren nach Ansprüchen 1 bis 3, **dadurch gekennzeichnet, daß** man als halogenierte Aldehyde Chlor- oder Brom-benzaldehyde einsetzt.

5. Verfahren nach Ansprüchen 1 bis 4, **dadurch gekennzeichnet, daß** man zur Herstellung der offenkettigen Aminale pro Mol halogenierten Aldehyd mindestens 2 Mol sekundäres Monoamin einsetzt, die Reaktion bei -30 bis +150°C durchführt und das gebildete Reaktionswasser abtrennt.

6. Verfahren nach Ansprüchen 1 bis 5, **dadurch gekennzeichnet, daß** man die Überführung in das Grignard-Reagenz durchführt, in dem man das offenkettige Aminal mit metallischem Magnesium bei -20°C bis zum Siedepunkt des Lösungsmittels umsetzt und als Lösungsmittel einen Ether oder ein Gemisch aus einem Ether und einem Kohlenwasserstoff einsetzt.

7. Verfahren nach Ansprüchen 1 bis 6, **dadurch gekennzeichnet, daß** man einen Überschuß von 1,05 bis 2 Äquivalenten Magnesium, bezogen auf die Halogenverbindung, einsetzt.

8. Verfahren nach Ansprüchen 1 bis 7, **dadurch gekennzeichnet, daß** man als Aktivator zum Starten der Reaktion zur Herstellung des Grignard-Reagenz elementares Iod oder niedere Bromalkane einsetzt.

9. Grignard-Reagenzien der Formel (V) 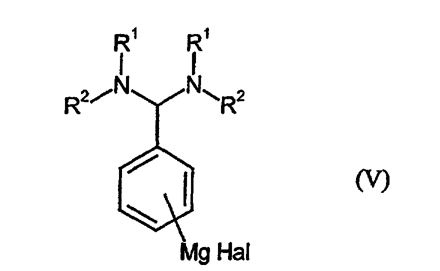 in denen
R¹ und R² die gleiche Bedeutung haben wie bei Formel (I) und m, n und X die gleiche Bedeutung wie in Formel (II) und
Hal für Chlor oder Brom steht.

10. Grignard-Reagenzien der Formel (VI) 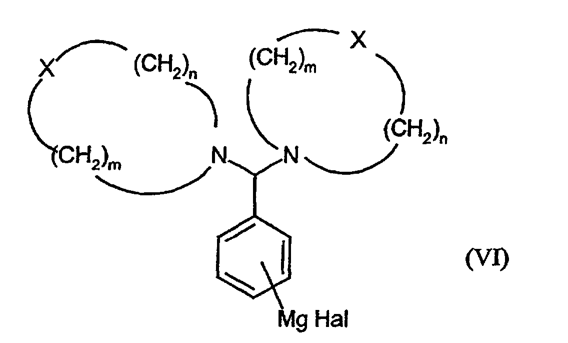 in denen
R¹ und R² die gleiche Bedeutung haben wie bei Formel (I) und m, n und X die gleiche Bedeutung wie in Formel (II) und
Hal für Chlor oder Brom steht.

## Claims

1. Process for the preparation of Grignard reagents which contain a protected aldehyde function, **characterized in that**, firstly, a halogenated aldehyde is reacted with a secondary monoamine to prepare an open-chain aminal, and the latter is converted into a Grignard reagent using metallic magnesium.

2. Process according to Claim 1, **characterized in that** the secondary monoamine used is one of the formula (I) 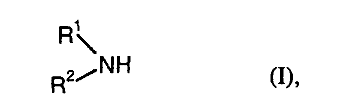 in which
R¹ and R² are identical or different and are each a straight-chain or branched C₁-C₁₀-alkyI, or alkylene, or a C₆-C₁₀-aryl which is optionally substituted by up to 3 C₁-C₄-alkyl radicals
or one of the formula (II) 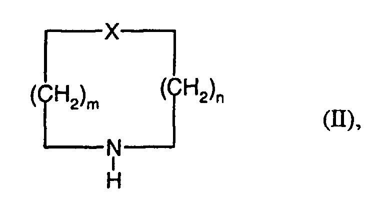 in which
m and n independently of one another are zero, 1 or 2, and the sum m + n is at least 1, and
X is oxygen or a CH₂ group.

3. Process according to Claims 1 and 2, **characterized in that** the halogenated aldehydes used are straight-chain or branched C₂-C₂₅-alkyl aldehydes containing 1 to 3 halogen atoms, or C₆-C₁₀-aryl aldehydes containing 1 to 3 halogen atoms.

4. Process according to Claims 1 to 3, **characterized in that** the halogenated aldehydes used are chloro- or bromobenzaldehydes.

5. Process according to Claims 1 to 4, **characterized in that**, for the preparation of the open-chain aminals, per mole of halogenated aldehyde, at least 2 mol of secondary monoamine are used, the reaction is carried out at -30 to +150°C, and the water of reaction formed is separated off.

6. Process according to Claims I to 5, **characterized in that** the conversion into the Grignard reagent is carried out by reacting the open-chain aminal with metallic magnesium at -20°C up to the boiling point of the solvent, and using, as solvent, an ether or a mixture of an ether and a hydrocarbon.

7. Process according to Claims 1 to 6, **characterized in that** an excess of from 1.05 to 2 equivalents of magnesium, based on the halogen compound, are used.

8. Process according to Claims 1 to 7, **characterized in that** the activator used for initiating the reaction for the preparation of the Grignard reagent is elemental iodine or lower bromoalkanes.

9. Grignard reagents of the formula (V) 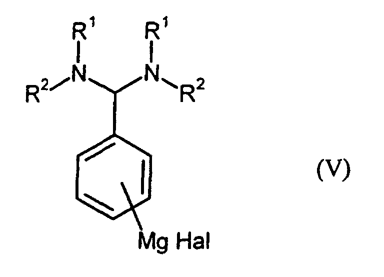 in which
R¹ and R² have the same meanings as in formula (I), and m, n and X have the same meanings as in formula (II), and
Hal is chlorine or bromine.

10. Grignard reagents of the formula (VI) 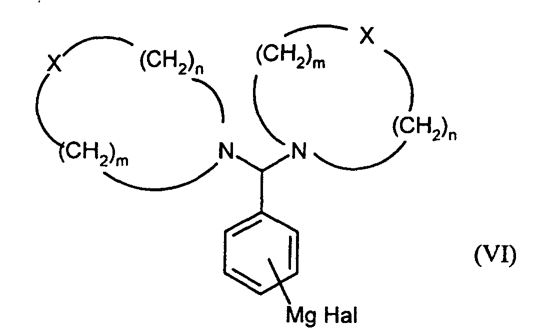 in which
R¹ and R² have the same meanings as in formula (I), and m, n and X have the same meanings as in formula (II), and
Hal is chlorine or bromine.

## Revendications

1. Procédé pour la préparation de réactifs de Grignard contenant une fonction aldéhyde protégée, **caractérisé en ce que** l'on prépare d'abord, à partir d'un aldéhyde halogéné, par réaction avec une monoamine secondaire, un aminal acyclique qu'on convertit ensuite à l'aide de magnésium métallique en un réactif de Grignard.

2. Procédé selon revendication 1, **caractérisé en ce que** l'on utilise en tant que monoamines secondaires les composés de formule (I) 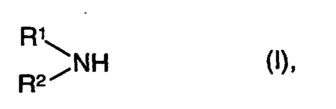 dans laquelle
R¹ et R², ayant des significations identiques ou différentes, représentent chacun un groupe alkyle à chaîne droite ou ramifiée en C₁-C₁₀ ou un groupe aryle en C₆-C₁₀ portant éventuellement jusqu'à 3 substituants alkyle en C₁-C₄,
ou bien des composés de formule (II) 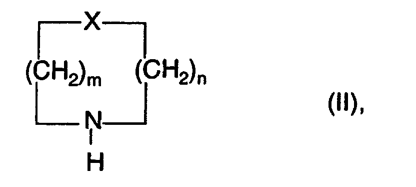 dans laquelle
m et n sont égaux chacun, indépendamment l'un de l'autre, à 0, 1 ou 2, et la somme m + n est égale au moins à 1 et
X représente l'oxygène ou un groupe CH₂.

3. Procédé selon les revendications 1 et 2, **caractérisé en ce que** l'on met en oeuvre en tant qu'aldéhydes halogénés des alkylaldéhydes à chaîne droite ou ramifiée en C₂-C₂₅ contenant 1 à 3 atomes d'halogènes ou des arylaldéhydes en C₆-C₁₀ contenant 1 à 3 atomes d'halogènes.

4. Procédé selon les revendications 1 à 3, **caractérisé en ce que** les aldéhydes halogénés mis en oeuvre sont des chloro- ou bromo-benzaldéhydes.

5. Procédé selon les revendications 1 à 4, **caractérisé en ce que**, pour la préparation des aminals acycliques, on met en oeuvre au moins 2 mol d'une monoamine secondaire par mole de l'aldéhyde halogéné, on exécute la réaction à des températures de -30 à +150°C et on sépare l'eau formée dans la réaction.

6. Procédé selon les revendications 1 à 5, **caractérisé en ce que**, pour la conversion en le réactif de Grignard, on fait réagir l'aminal acyclique avec du magnésium métallique à des températures comprises entre -20°C et le point d'ébullition du solvant et on utilise en tant que solvant un éther ou un mélange d'un éther et d'un hydrocarbure.

7. Procédé selon les revendications 1 à 6, **caractérisé en ce que** l'on utilise un excès de 1,05 à 2 équivalents de magnésium par rapport au dérivé halogéné.

8. Procédé selon les revendications 1 à 7 **caractérisé en ce que**, pour le démarrage de la réaction de préparation du réactif de Grignard, on utilise en tant qu'activateur de l'iode élémentaire ou un bromoalcane inférieur.

9. Réactifs de Grignard répondant à la formule (V) 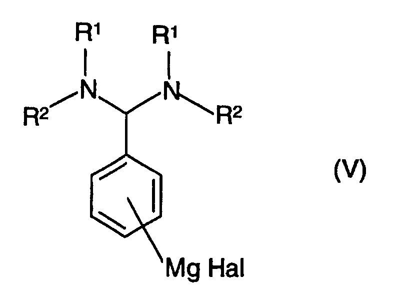 dans laquelle
R¹ et R² ont les significations indiquées en référence à la formule (I) et m, n et X ont les significations indiquées en référence à la formule (II) et
Hal représente le chlore ou le brome

10. Réactifs de Grignard de formule (VI) 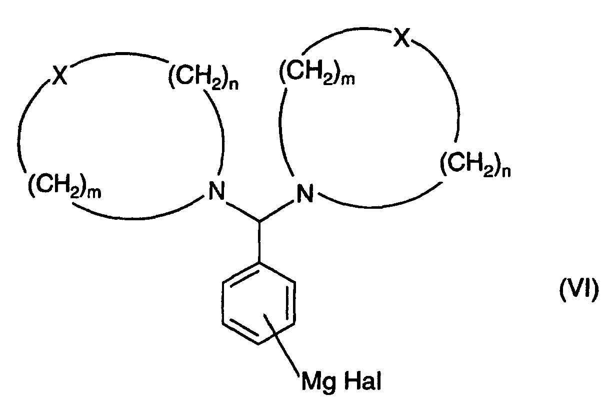 dans laquelle
R¹ et R² ont les significations indiquées en référence à la formule (I) et m, n et X les significations indiquées en référence à la formule (II) et
Hal représente le chlore ou le brome.
